# FASCICULE DE BREVET EUROPEEN

(11) **EP 0 895 852 B1**
(45) Date de publication et mention de la délivrance du brevet: **18.09.2002**
(21) Numéro de dépôt: 98401733.5
(22) Date de dépôt: 09.07.1998
(51) Int. Cl.: B32B 15/01, C22C 47/00

(54) **Tôle de structure multicouche dite tôle sandwich**
Mehrschichtiges Blech, genannt Sandwich-Blech
Multilayered sheet, also known as sandwich sheet

(30) Priorité: 06.08.1997 FR 9710031
(43) Date de publication de la demande: 10.02.1999
(73) Titulaire: UGINE S.A., 92800 Puteaux (FR)
(72) Inventeur: Mantel, Marc, 73200 Mercury (FR)
(74) Mandataire: Ventavoli, Roger

(56) Documents cités:
- EP-A- 0 486 427
- DE-A- 2 201 637
- DE-A- 3 935 120
- DE-U- 9 203 734
- FR-A- 798 302
- FR-A- 2 086 225
- FR-A- 2 292 181
- FR-A- 2 396 868
- US-A- 3 793 700

## Description

La présente invention concerne une tôle de structure multicouche dite tôle sandwich composée de deux peaux métalliques laminées, liées entre elles par une âme.

Les secteurs industriels, notamment l'industrie automobile, sont demandeurs de matériaux favorisant l'allégement comme par exemple, des matériaux composites en acier du type multicouche, qui ont les propriétés de l'acier et une densité plus faible. Ces matériaux multicouches peuvent être notamment utilisés dans la fabrication de pièces de carrosserie de véhicules automobiles ou de lignes d'échappement.

De nombreux brevets ont déjà été déposés sur des structures multicouches constituées de deux peaux métalliques associées à une âme en résine organique.

Il est connu, par exemple, le brevet FR 90 06 805 concernant un procédé de réalisation de tôle de structure multicouche dite tôle sandwich, la tôle obtenue par le procédé comportant deux peaux métalliques et une âme en matériau polymère dont le but est d'avoir une fonction d'amortissement acoustique, vibratoire, ou d'améliorer le ratio rigidité/poids. La mise en forme de ce type de structure multicouche pose des problèmes d'emboutissage et de soudage. En effet, les faibles caractéristiques mécaniques du matériau dont est composé l'âme génèrent le fluage dudit matériau lors de l'emboutissage. Du point de vue du soudage, le matériau dont est composé l'âme est un isolant électrique, ce qui génère un problème de conductivité dans le sens de l'épaisseur, lors du soudage, même lorsque la conductivité est améliorée, en pratique, par l'adjonction, dans le matériau, de charges conductrices de l'électricité comme par exemple, des billes de nickel.

On connaît également le brevet FR 89 17 142, qui décrit une structure comportant deux peaux extérieures couvrantes et reliées entre elles par une âme de faible densité, âme constituée d'un matériau moins rigide que lesdites peaux, comme par exemple, une âme textile mise en forme à chaud après imprégnation d'une résine synthétique.

La technique décrite dans ce document permet la réalisation d'un produit composite de structure sandwich, de surface et de forme quelconque, comportant des zones de résistance mécanique particulière ou de caractéristique spécifique comme par exemple, acoustique, vibratoire, thermique.

Dans le procédé, présenté dans le document cité, l'âme est mise en forme préalablement à la mise en place des deux peaux, qui sont, elles aussi, mises en forme avant assemblage.

FR-A-2 292 181 divulgue une tôle de structure multicouche comportant deux peaux en acier laminé renfermant entre elles une âme constituée d'une laine en acier inoxydable austénitique.

La présente invention a pour but notamment d'éviter les inconvénients des structures décrites ci-dessus en présentant une tôle de structure multicouche dite tôle sandwich, composée de deux peaux métalliques laminées, liées entre elles par une âme conductrice de l'électricité et dont la mise en forme peut être réaliser comme dans le cas d'une tôle simple, unique.

L'invention a pour objet une tôle de structure multicouche dite tôle sandwich, composée de deux peaux métalliques laminées, liées entre elles par une âme constituée d'une laine d'acier inoxydable. La tôle selon l'invention est définie dans la revendication 1.

Préférablement, la laine d'acier inoxydable occupe de 30% à 60% du volume séparant les deux peaux.

L'invention concerne également un procédé de réalisation d'une tôle de structure multicouche dite tôle sandwich, composée de deux peaux métalliques laminées, liées entre elles par une âme constituée d'une laine d'acir inoxydable, procédé dans lequel :
on assemble les deux peaux et l'âme par calandrage, de façon à définir l'épaisseur de la structure multicouche,
on génère un arc perpendiculairement à la surface des peaux pour provoquer dans la zone de l'arc, d'une part, la soudure des fibres de laine d'acier qui se trouvent en contact entre elles, dans l'âme, ce qui forme un réseau rigide, et d'autre part, la soudure des fibres de laine d'acier qui se trouvent en contact avec les surfaces internes des deux peaux pour assurer la liaison entre l'âme et lesdites peaux.

L'invention concerne aussi une tôle dans une application à la réalisation d'un tube de ligne d'échappement pour véhicule automobile dans laquelle la tôle de structure multicouche est roulée, soudée par exemple par induction pour former un tube comportant une double paroi et une âme de laine d'acier inoxydable.

La description qui suit et les figures associées, le tout donné à titre d'exemple non limitatif, fera bien comprendre l'invention.

La figure 1 présente, en coupe, une tôle plane de structure multicouche selon l'invention.

La figure 2 présente, en coupe, une forme emboutie réalisée par déformation de la tôle plane de structure multicouche selon l'invention.

La figure 3 est une coupe d'un tube réalisé à partir de la tôle plane de structure multicouche selon l'invention.

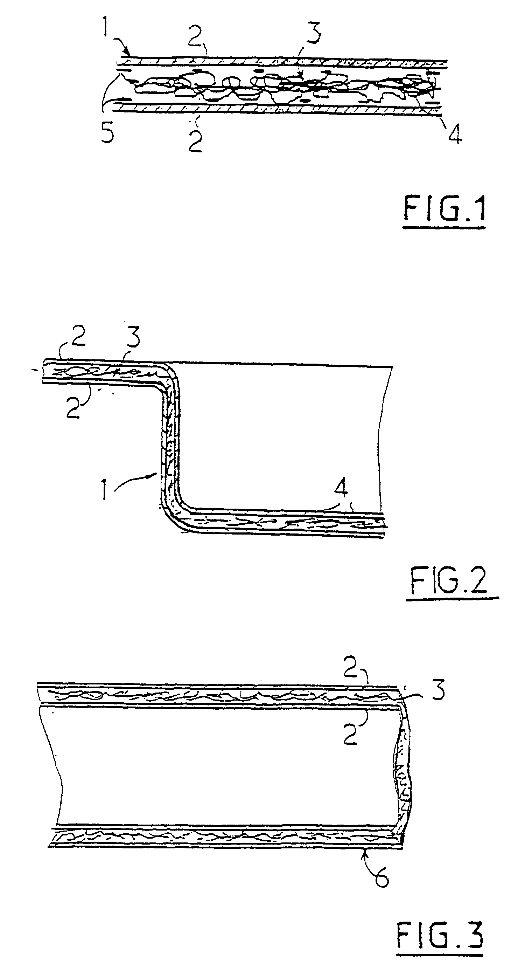

Comme présenté sur la figure 1, la tôle 1 de structure multicouche, selon l'invention, est composée d'une part, de deux peaux 2 métalliques par exemple en acier inoxydable austénitique ou ferritique dont l'épaisseur peut varier de 0,05 mm à 0,3 mm et d'autre part, d'une âme 3 en laine d'acier ionxydable.

L'âme 3, d'une épaisseur d'environ 1 mm, est constituée de laine 4 d'acier inoxydable ferritique. La laine 4 d'acier est obtenue par rasage, de préférence, à l'état écroui, pour augmenter les caractéristiques mécaniques de la structure. Les brins de laine d'acier ont une longueur moyenne de 70 cm et leur diamètre peut varier de 30 microns à 100 microns. De préférence, le diamètre des brins de la laine 4 d'acier est d'environ 60 microns. Ce diamètre doit être homogène pour éviter des fragilisations qui conduisent à des brisures.

Dans un exemple d'application, pour la réalisation de la tôle de structure multicouche en bobine, on utilise une ligne de calandrage dans un procédé de réalisation dans lequel :
- on déroule deux bobines pour déplacer parallèlement deux bandes d'acier qui formeront les peaux 2 de la structure.
- simultanément, on déroule un tapis de laine 4 d'acier inoxydable sur la bande inférieure, tapis qui constitue l'âme 3,
- on presse le tapis de laine 4 d'acier entre les deux bandes d'acier sur une calandre pour définir l'épaisseur.
- l'adhésion de l'âme 3 avec les deux peaux 2 est réalisée par soudage

Dans le soudage, on génère un arc, par décharge de condensateur, perpendiculairement à la surface des peaux 2 pour provoquer dans la zone de l'arc, d'une part, la soudure des fibres de laine 4 d'acier qui se trouvent en contact entre elles, dans l'âme, pour constituer un réseau rigide, et d'autre part, la soudure des fibres de laine 4 d'acier qui se trouvent en contact avec les surfaces internes des deux peaux 2 pour assurer la liaison entre l'âme 3 et lesdites peaux 2. Cela assure la réalisation d'une structure tout acier pouvant être utilisée à des températures relativement élevées, c'est à dire à des température dépassant 500°C.

Selon l'invention, l'âme d'acier inoxydable ayant par exemple une densité de 400 g/ m² est formée par un réseau, non compact, désordonné, de fibres espacées, dans lequel les fibres peuvent être soudées deux à deux, du fait de leur contact au moment de la décharge de l'arc de soudure. Cette structure forme une charpente liée aux deux peaux lors de la soudure.

Pour assurer la tenue mécanique de la laine d'acier inoxydable, ladite laine est laminée de façon à constituer un tapis d'épaisseur et de densité données.

La structure multicouche selon l'invention, contrairement aux structures connues, a l'avantage, lors de la mise en forme de pièces, de générer dans les zones déformées par emboutissage, comme présenté sur la figure 2, des parties de pièce de plus faibles épaisseurs qui conservent les propriétés mécaniques de la structure. En effet, lors de l'emboutissage, la laine d'acier inoxydable, en réseau, est compressée et supporte une charge pendant de la déformation de la structure. Dans le cas par exemple d'une âme alvéolaire de l'art antérieur, les alvéoles qui n'ont qu'une fonction d'entretoise, perdent lors d'un écrasement, leur propriétés mécaniques par effet de flambage et pliage.

Selon l'invention, l'âme 3 constituée par d'acier inoxydable assure une conductivité électrique entre les deux peaux 2, ce qui permet un soudage par points ou toute autre technique.

Dans une application, du domaine de l'échappement des véhicules automobiles, il est possible de réaliser par exemple un tube aval d'une ligne d'échappement.

La peau intérieure du tube représenté sur la figure 3 peut être préalablement perforée.

Le tube 6 de ligne d'échappement formé d'une double paroi et d'une âme d'acier inoxydable assure un amortissement des vibrations tout le long de la ligne d'échappement donc une diminution des nuisances sonores, et, également, une fonction d'écran thermique.

L'allégement de la structure contribue aussi favorablement à la protection de l'environnement via une réduction de la consommation d'essence du véhicule.

## Revendications

1. Tôle de structure multicouche dite tôle sandwich, composée de deux peaux métalliques laminées, liées entre elles par une âme constituée d'une laine en acier inoxydable **caractérisée en ce que** la laine en acier inoxydable est une laine d'acier inoxydable ferritique et **en ce que** l'âme et les deux peaux sont liées par soudage a arc, à décharge de condensateur, pour constituer un réseau rigide, la soudure des fibres de laine se trouvant en contact avec les surfaces internes des deux peaux, assurant une liaison entre l'âme et les peaux.

2. Tôle selon la revendication 1 **caractérisée en ce que** la laine métallique occupe de 30% à 60% du volume séparant les deux peaux.

3. Procédé de réalisation d'une tôle de structure multicouche dite tôle sandwich, composée de deux peaux métalliques laminées, liées entre elles par une âme constituée d'une laine d'acier inoxydable, selon les revendications de 1 à 2 **caractérisé en ce que** :
- on assemble les deux peaux et l'âme par calandrage, de façon à définir l'épaisseur de la structure multicouche,
- on génère un arc perpendiculairement à la surface des peaux pour provoquer dans la zone de l'arc, d'une part, la soudure des fibres de laine d'acier qui se trouvent en contact entre elles, dans l'âme, ce qui forme un réseau rigide, et d'autre part, la soudure les fibres de laine d'acier qui se trouvent en contact avec les surfaces internes des deux peaux pour assurer la liaison entre l'âme et lesdites peaux.

4. Utilisation de la tôle selon les revendications 1 à 2 dans une application à la réalisation d'un tube de ligne d'échappement pour véhicule automobile, **caractérisée en ce que** la tôle de structure multicouche est roulée, soudée par exemple par induction pour former un tube comportant une double paroi et une âme de laine inoxydable.

## Patentansprüche

1. Blech mit Mehrschicht-Struktur, sogenanntes Verbundblech, bestehend aus zwei gewalzten, metallischen Schichten, die über eine aus rostfreier Stahlwolle bestehende Zwischenschicht miteinander verbunden sind, **dadurch gekennzeichnet, dass** die rostfreie Stahlwolle eine ferritische rostfreie Stahlwolle ist und dass die Zwischenschicht und die beiden Schichten durch eine durch Kondensatorentladung erzeugte Lichtbogenschweissung miteinander verbunden sind, durch die ein steifes Netz gebildet wird, wobei die Verschweissung der die Innenseiten der beiden Schichten berührenden Fasern der Wolle die Verbindung der Zwischenschicht mit den beiden Schichten gewährleistet.

2. Blech nach Anspruch 1, **dadurch gekennzeichnet, dass** die Metallwolle zwischen 30% und 60% des Raumes zwischen den beiden Schichten ausfüllt.

3. Verfahren zur Herstellung eines Bleches mit Mehrschicht-Strukttur, sogenanntes Verbundblech, bestehend aus zwei gewalzten metallischen Schichten, die über eine aus rostfreier Stahlwolle bestehende Zwischenschicht miteinander verbunden werden, nach den Ansprüchen 1 bis 2, **dadurch gekennzeichnet, dass**:
- die beiden Schichten mittels Kalandrieren derart miteinander verbunden werden, dass die Dicke der Mehrschicht-Struktur festgelegt wird,
- ein Lichbogen senkrecht zur Oberfläche der Schichten erzeugt wird, der im Auftreffbereich des Lichtbogens einerseits eine Verschweissung derjenigen Fasern der Stahlwolle in der Zwischenschicht miteinander bewirkt, die sich berühren, wobei ein steifes Netz gebildet wird und andererseits eine Verschweissung derjenigen Fasern der Stahlwolle, die die Innenseiten der beiden Schichten berühren, mit diesen bewirkt um damit die Verbindung der Zwischenschicht mit den beiden Schichten zu gewährleisten.

4. Verwendung des Bleches nach den Ansprüchen 1 bis 2 als Baumaterial für die Herstellung eines Rohres für eine Auspuffanlage für ein Kraftfahrzeug, **dadurch gekennzeichnet, dass** das Blech mit der Mehrschicht-Struktur gerollt wird und zum Beispiel durch Induktionsschweissen verbunden wird um ein Rohr mit Doppelwand und einer Zwischenschicht aus rostfreier Wolle zu bilden.

## Claims

1. Sheet having a multilayer structure, called a sandwich sheet, composed of two rolled metal skins which are joined together by a core consisting of a stainless steel wool, **characterized in that** the stainless steel wool is a ferritic stainless steel wool and **in that** the core and the two skins are joined together by capacitor discharge arc welding in order to constitute a rigid network, the welding of the wool fibres which are in contact with the internal surfaces of the two skins ensuring connection between the core and the skins.

2. Sheet according to Claim 1, **characterized in that** the metal wool occupies from 30% to 60% of the volume separating the two skins.

3. Process for producing a sheet having a multilayer structure, called a sandwich sheet, composed of two rolled metal skins joined together by a core consisting of a stainless steel wool, according to Claims 1 and 2, **characterized in that**:
- the two skins and the core are assembled by calendering so as to define the thickness of the multilayer structure;
- an arc is generated perpendicular to the surface of the skins in order to weld, in the arc zone, on the one hand, the fibres of steel wool which are in contact with each other, in the core, thereby forming a rigid network, and, on the other hand, the fibres of steel wool which are in contact with the internal surfaces of the two skins in order to ensure connection between the core and the said skins.

4. Use of the sheet according to Claims 1 and 2 in an application involving the production of a tube for a motor-vehicle exhaust line, **characterized in that** the sheet having a multilayer structure is rolled and welded, for example by induction welding, in order to form a tube having a double wall and a core of stainless steel wool.
